# EUROPÄISCHE PATENTSCHRIFT

(11) **EP 2 029 389 B1**
(45) Veröffentlichungstag und Bekanntmachung des Hinweises auf die Patenterteilung: **14.05.2014**
(21) Anmeldenummer: 07725408.4
(22) Anmeldetag: 22.05.2007
(51) Int. Cl.: B60N 2/48

(54) **BETÄTIGUNGSVORRICHTUNG ZUR KOPFSTÜTZENVERSTELLUNG UND KOPFSTÜTZENDEMONTAGE UNTER BERÜCKSICHTIGUNG DES FMVSS 202A-STANDARDS**
ACTUATING DEVICE FOR HEAD REST ADJUSTMENT AND HEAD REST DISASSEMBLY IN CONSIDERATION OF THE FMVSS 202A-STANDARD
DISPOSITIF D'ACTIONNEMENT POUR LE RÉGLAGE ET LE DÉMONTAGE DES APPUIE-TÊTE EN TENANT COMPTE DE LA NORME FMVSS 202A

(30) Priorität: 01.06.2006 DE 102006026029
(43) Veröffentlichungstag der Anmeldung: 04.03.2009
(73) Patentinhaber: Volkswagen Aktiengesellschaft, 38440 Wolfsburg (DE)
(72) Erfinder: FOLLESA, Roberto, 38102 Braunschweig (DE); SCHMUDA VON TRZEBIATOWSKI, Peter, 38170 Schöppenstedt (DE)
(86) Internationale Anmeldenummer: PCT/EP2007/004502
(87) Internationale Veröffentlichungsnummer: WO 2007/137726

(56) Entgegenhaltungen:
- DE-A1- 19 523 358
- US-A1- 2003 222 493
- US-A1- 2005 077 772

## Beschreibung

Die vorliegende Erfindung betrifft eine Kopfstütze für einen Fahrzeugsitz mit den im Oberbegriff des Anspruchs 1 genannten Merkmalen (siehe z.B. die DE 19 730 911 C2).

Es ist allgemein bekannt, höhenverstellbare Kopfstützen in Kraftfahrzeugen, insbesondere Pkws/Lkws, über Kopfstützenhalterungen an Fahrzeugsitzen auszuführen. Die bekannten Kopfstützen bieten dem Sitzbenutzer bei gerader und auch leicht nach hinten geneigter Rückenlehne die Möglichkeit, den Kopf an der Kopfstütze anzulehnen. Die allgemein bekannten Kopfstützen dienen neben der Einnahme einer bequemen Sitzhaltung vor allem dazu, bei einem Unfall einen entsprechenden Widerhalt des Kopfes beziehungsweise des Halswirbelsäulenbereiches der entsprechenden Person zu gewährleisten. So haben ein Fahrzeugsitz und die zugehörige Kopfstütze neben den Komforteigenschaften sicherheitstechnische Aspekte zu erfüllen. Dies gilt insbesondere für die zumeist einstellbare Höhenposition der Kopfstütze, die in einer überwiegenden Vielzahl über höhenverstellbare Kopfstützenhalterungen realisiert wird.

Die Kopfstützenhalterungen werden inzwischen in Rückenlehnen-Integrierte- Entriegelungen und "Kopfstützen-Integrierte-Entriegelungen" (KIE) unterschieden.

Rückenlehnen-Intregrierte-Entriegelungen sind beispielsweise aus der DE 34 36 541 C1 als ein Arretiermechanismus mit einem Bedienelement bekannt, dessen Verschiebeführung in etwa parallel zur Verschiebeführung des zu arretierenden Kopfstützenhaltebügels angeordnet ist. Alternativ hierzu sind auch Ausführungen bekannt, bei denen das Bedienelement im Wesentlichen im rechten Winkel zur Achse der Kopfstützenführung zu bewegen ist (siehe hierzu beispielsweise die DE 36 36 931 C1). In der Praxis haben sich derartige Konzepte grundsätzlich bewährt. Stetig wachsende Anforderungen an den Bedienkomfort einerseits und an möglichst leichtbauende Konstruktionen andererseits erfordern jedoch weitergehende Optimierungen derartiger Kopfstützen.

Eine "Kopfstützen-Integrierte-Entriegelung" (KIE) wird in der DE 195 23 358 C2 beschrieben. Die Druckschrift offenbart einen Arretierungsmechanismus für eine Kopfstütze, die über wenigstens einen Haltebügel in einem Gestellteil eines Sitzes, insbesondere Fahrzeugsitzes, zumindest mittelbar gehalten und in verschiedenen Höhen durch ein mit wenigstens einem Verriegelungselement zusammenwirkendes Bedienelement positionierbar ist, wobei ein innerhalb des Haltebügels angeordnetes Kraftübertragungselement, das einerends zumindest mittelbar durch das Bedienelement beaufschlagbar und anderenends mit einem den Haltebügel durchdringenden, zur Verrastung in einer sitzfesten Rastaufnahme hergerichteten und als Verriegelungselement wirksamen Sperrelement zumindest mittelbar wirkverbunden ist.

Ferner ist aus der eingangs genannten Druckschrift DE 197 30 911 C2, wie in Figur 1 gezeigt, eine Lösung bekannt, bei welcher die Höhenverstellung der Kopfstütze über eine erste Druckstufe und die Entnahme der Kopfstütze über eine zweite tiefere Druckstufe der gleichen Betätigungsvorrichtung erfolgt. Diese Lösung war nach dem bisherigen FMVSS 202-Standard möglich und kann nun unter dem FMVSS'202a-Standard nicht mehr eingesetzt werden.

Die bekannten Lösungen, insbesondere auch die zur Vervollständigung genannten Druckschriften US 200/0222493 A1 und US 2005/0077772, ermöglichen also prinzipiell die Höhenverstellung und Entnahme der Kopfstützen an einer Betätigungsvorrichtung.

Der neu vorliegende FMVSS 202a-Standard fordert, dass zur Höhenverstellung und zur Entnahme von Kopfsstützen keine Betätigungsvorrichtung angeordnet werden darf, bei der sowohl Höhenverstellung als auch Entnahme mit einer Bedienhandlung an der gleichen Betätigungsvorrichtung möglich sind. Die Bedienhandlung zur Höhenverstellung und die Bedienhandlung zur Entnahme einer Kopfstütze müssen getrennt voneinander unter Vermeidung von Fehlbedienungen ausgeführt werden können.

Der Erfindung liegt somit die Aufgabe zugrunde, eine Betätigungsvorrichtung zu schaffen, bei der zur Vermeidung von Fehlbedienungen Höhenverstellung und Entnahme mit eindeutig unterscheidbaren Bedienhandlungen möglich sind.

Ausgangspunkt der Erfindung ist eine Betätigungsvorrichtung für eine Kopfstütze, die über mindestens ein Halteelement in einem Gestellteil eines Sitzes, insbesondere einer Rückenlehne eines Kraftfahrzeugsitzes, geführt und zumindest mittelbar gehalten ist, welches in verschiedenen Höhen durch ein mit mindestens einem Verriegelungselement zusammenwirkendes zu bedienendes Betätigungselement relativ zum Gestellteil positionierbar ist, wobei eine erste Bedienhandlung des Betätigungselementes in axialer Richtung eine Höhenverstellung unter Überwindung einer ersten Druckstufe und eine zweite Bedienhandlung des Betätigungselementes weiter in axialer Richtung unter Überwindung einer zweiten Druckstufe eine Entnahme der Kopfstütze aus dem Gestellteil des Sitzes erlaubt.

Erfindungsgemäß ist vorgesehen, dass die zweite Bedienhandlung des Betätigungselementes zur Entnahme der Kopfstütze weiter in axialer Richtung durch eine der zweiten Bedienhandlung vorgelagerte oder parallele dritte Bedienhandlung an mindestens einem in dem Betätigungselement integrierten Sperrglied fortsetzbar ist, dessen Anlagefläche bei der dritten Bedienhandlung an einer Hülse des Betätigungselementes nicht mehr zur Anlage kommt.

Dadurch, dass eine zweite Bedienhandlung zur Entnahme der Kopfstütze parallel oder nach einer dritten Bedienhandlung an mindestens einem im Betätigungselement integrierten Sperrglied, welches als zusätzliches Betätigungselement zu betrachten ist, ausführbar ist, wird sichergestellt, dass der Benutzer nicht versehentlich die zweite Bedienhandlung, die zur Entnahmemöglichkeit der Kopfstütze führt, vornimmt, obwohl er lediglich vorhatte, die Entriegelung der Kopfstütze durch eine erste Bedienhandlung vorzunehmen, um die Kopfstütze in ihrer Höhe zu verstellen.

Bevor der Benutzer die Bedienhandlung zur Entnahme der Kopfstütze durch die zweite Bedienhandlung vornimmt, muss er stets eine bewusste weitere dritte Bedienhandlung an dem zusätzlich angeordneten Sperrglied der Betätigungsvorrichtung vornehmen.

Erst die Freigabe der zweiten durchzuführenden Bedienhandlung zur Entnahme der Kopfstütze, durch die dritte Bedienhandlung führt nämlich zur Entriegelung des Sperrgliedes und erlaubt die Entnahme der Kopfstütze.

In bevorzugter Ausgestaltung der Erfindung wird die erste Bedienhandlung durch Drücken an einer Taste des Betätigungselementes und durch Überwindung einer ersten Druckstufe und eine zweite Bedienhandlung durch Überwindung einer zweiten Druckstufe an der Taste bewirkt, wodurch eine Übertragung der Bewegung des Betätigungselementes über einen Betätigungsstab innerhalb des Halteelementes und somit eine druckstufenabhängige Verlagerung eines Verriegelungselementes in einem Halteelement erfolgt.

In weiterer bevorzugter Ausgestaltung ist das mindestens eine Halteelement, insbesondere eine Kopfstützenstange, die nach erfolgter erster Bedienhandlung, durch das mindestens eine Verriegelungselement relativ zum Gestellteil in einer Rasteinheit positionierbar, insbesondere rastpositionierbar ist, wobei das Halteelement unmittelbar im Gestellteil oder mittelbar in mindestens einem Führungselement angeordnet ist.

Ferner umfasst das in der Kopfstütze angeordnete Betätigungselement eine Hülse und eine das Betätigungselement gegenüber der Kopfstütze abgrenzende Blende, in der die Taste angeordnet ist, die in der Hülse geführt ist, und an dessen Tastenbetätigungsfläche die erste und zweite Bedienhandlung ausführbar ist.

Die erste und zweite Bedienhandlung der Taste wirkt über eine der Tastenbetätigungsfläche gegenüberliegend ausgebildete Anlaufschräge axial auf das obere Ende des innerhalb des Halteelementes geführten Betätigungsstabes, der das Verriegelungselement mit seinem unteren Ende gegenüber der Rasteinheit, welche unmittelbar im Gestellteil oder mittelbar in dem mindestens einen Führungselement angeordnet ist, - druckstufenabhängig - nach der ersten Bedienhandlung in der ersten Druckstufe zumindest teilweise und nach der zweiten Bedienhandlung der zweiten Druckstufe vollständig in einer der ersten und zweiten Bedienhandlung entgegengesetzten axialen Richtung einzieht.

In bevorzugter Ausgestaltung der Erfindung weist die Hülse des Betätigungselementes eine radial angeordnete Öffnung auf, über welche die dritte Bedienhandlung an einer Sperrgliedbetätigüngsfläche ausführbar ist, wobei die Öffnung in Richtung der ersten und zweiten Bedienhandlung des Betätigungselementes gleichzeitig eine Anlagefläche bietet, an der das Sperrglied mit seinem der Taste gegenüberliegenden Ende nach erfolgter erster Bedienhandlung zur Anlage kommt und die zweite Bedienhandlung sperrt.

Schließlich wird bevorzugt ausgeführt, dass eine Rückführung der Taste nach erfolgter Bedienhandlung unter Aufbau von Rückstellkräften durch Federelemente erfolgt, die im Bereich des Betätigungsstabes und/oder im Bereich der Hülse des Befestigungselementes angeordnet sind.

Weitere bevorzugte Ausgestaltungen der Erfindung ergeben sich aus den übrigen, in den Unteransprüchen genannten Merkmalen und der Beschreibung des einzigen Ausführungsbeispieles.

Die Erfindung wird nachfolgend anhand eines Ausführungsbeispieles mit Hilfe von zugehörigen
Figuren näher erläutert. Es zeigen:
   - Figur 1: eine perspektivische Darstellung der Kopfstütze mit Betätigungsvorrichtung nach dem Stand der Technik;
   - Figur 2: eine perspektivische Darstellung der Kopfstütze mit Betätigungsvorrichtung in Explosionsdarstellung;
   - Figur 3: eine Schnittdarstellung der Betätigungsvorrichtung, und
   - Figur 3A: eine vergrößerte Schnittdarstellung eines Sperrgliedes der Betätigungsvorrichtung.

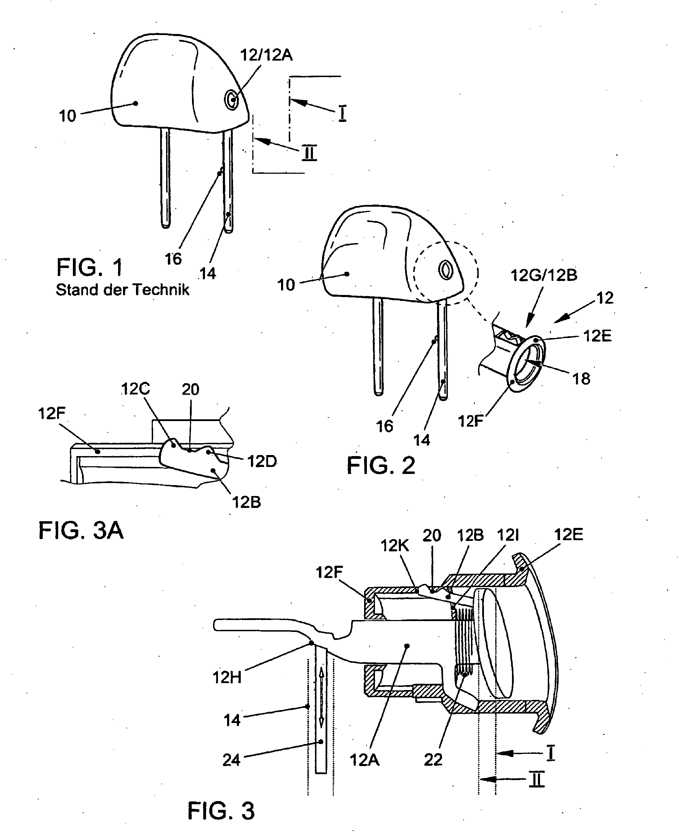

Figur 1 zeigt zunächst eine Kopfstütze 10 nach dem Stand der Technik. Die Kopfstütze 10 weist Kopfstützstangen als Halteelemente 14 auf, wobei im Ausführungsbeispiel im in Fahrtrichtung gesehenen linken Halteelement 14 ein Verriegelungselement 16 angeordnet ist, welches radial aus dem Halteelement 14 heraussteht und gegenüber einem Gestellteil einer nicht dargestellten Rückenlehne eine Verriegelung, insbesondere eine Verrastung, an einer nicht dargestellten Rasteinheit ermöglicht.

Zur Höhenverstellung wird ein Betätigungselement 12 bedient, welches das Verriegelungselement 16 durch eine erste Bedienhandlung durch Überwindung einer ersten Druckstufe I zumindest teilweise in das Halteelement 14 einzieht, so dass eine Höhenverstellung der Kopfstütze 10 relativ zum ebenfalls nicht näher dargestellten Gestellteil der Rückenlehne ausführbar ist.

Das Verriegelungselement 16 bleibt jedoch nach erfolgter erster Bedienhandlung teilweise außerhalb des Halteelementes 14 zurück, so dass die Kopfstütze 10 durch eine nicht näher dargestellte Begrenzung, die selbstverständlich in Entnahmerichtung im/am Gestellteil angeordnet ist, nicht entnommen werden kann.

Erst nach Überwindung der zweiten Druckstufe II und einer entsprechenden zweiten Bedienhandlung am Bedienelement 12 wird das Verriegelungselement 16 so weit in das Haltelement 14 zurückgezogen, dass die Begrenzung im Gestellteil der Rückenlehne überwunden werden kann und die Kopfstütze 10 entnehmbar ist.

Nach dem neuen Standard soll die Entnehmbarkeit der Kopfstütze 10 und die zugehörige Bedienhandlung zur Entnahme deutlich von der Bedienhandlung der Kopfstützenhöhenverstellung unterscheidbar sein. Damit sollen gegebenenfalls Fehlbedienungen der Benutzer von vornherein verhindert werden.

Figur 2 zeigt in einer explosionsartigen Darstellung das Betätigungselement 12, welches erfindungsgemäß eine Öffnung 12G aufweist, in der ein Sperrglied 12B angeordnet ist. Die weiteren Bezugszeichen entsprechen Figur 1.

Figur 2 zeigt ferner, dass das Betätigungselement eine Taste 12A ist, die auch bereits nach dem Stand der Technik ausgeführt worden ist, die in Figur 2 und 3 sowie 3A bereits unter Überwindung der ersten Druckstufe I über eine Tastenbetätigungsfläche 18 als erste Bedienhandlung betätigt worden ist. Eine weitere zweite Bedienhandlung unter Überwindung der zweiten Druckstufe II ist nun erfindungsgemäß nur durch die gleichzeitige oder vorhergehende Betätigung des Sperrgliedes 12B, als zusätzliche Bedienkomponente, über die Öffnung 12G an einer Sperrgliedbetätigungsfläche 20 möglich, die in den Figuren 3, 3A am besten sichtbar ist.

Aus Figur 2 wird sichtbar, dass das Betätigungselement 12 über eine Blende 12E an der Seitenfläche der Kopfstütze 10 abschließt. Zur Bedienung des Sperrgliedes 12B muss der Korpus der Kopfstütze 10 so ausgestaltet sein, dass ein Bediener die dritte Bedienhandlung zur Entriegelung des Sperrgliedes 12B ausführen kann, wobei erfindungsgemäß sichergestellt ist, dass der Bediener den Korpus der Kopfstütze an der dafür vorgesehenen Stelle entsprechend verformen, vorzugsweise ausreichend tief eindrücken kann.

Durch diese Lösung ist vorteilhaft gewährleistet, dass das zusätzliche Element, das Sperrglied 12B des Betätigungselementes 12, nicht sichtbar ist, aber trotzdem bedient werden kann.

Figur 3 zeigt das Betätigungselement 12 in einem Schnitt entlang einer mittleren Achse, wobei die Taste 12A bereits gemäß Figur 2 und 3A betätigt worden ist, so dass die erste Druckstufe I bereits überwunden wurde. Das Sperrglied 12B weist, wie die vergrößerte Darstellung Figur 3A zeigt, einen ersten Sperrzahn 12C und einen zweiten Sperrzahn 12D auf, wobei das vordere Ende des Sperrgliedes 12B mit der Öffnung 12G in Verlagerungsrichtung der Taste 12A an der Hülse 12F eine Anlagefläche 12K bildet.

Eine weitere zweite Bedienhandlung zur Überwindung der zweiten Druckstufe II ist somit nicht mehr möglich.

Die erste Bedienhandlung unter Überwindung der ersten Druckstufe I hat aber bereits durch eine am Taster 12A angeordnete Auflaufschräge 12H zu einer orthogonal zur axial ausgeübten Bewegungsrichtung des Tasters 12A verlaufenden Verlagerung eines Betätigungsstabes 24 geführt, der im Halteelement im Ausführungsbeispiel der Kopfstützenstange 14 angeordnet ist. An dem der Auflaufschräge 12H gegenüberliegenden Ende des Betätigungsstabes 24 sind geeignete Vorrichtungen angeordnet, um das Verriegelungselement 16 zumindest teilweise in die Kopfstützenstange 14 zurückzuziehen.

Wie oben erläutert ist jedoch eine Entnahme durch die nur teilweise Zurückziehung des Verriegelungselementes 16 durch ein Begrenzungselement in Entnahmerichtung der Kopfstütze 10 noch nicht möglich.

Erst die zweite Bedienhandlung unter Überwindung der zweiten Druckstufe II führt zu einer weiteren axialen Bewegung des Tasters 12A, der über die Auflaufschräge 12H den Betätigungsstab 24, wie bei der zur ersten Bedienhandlung, weiter in orthogonaler Richtung zum Taster 12A verlagert, so dass durch die gleichen am Ende des Betätigungsstabes 24 angeordneten Mittel (nicht dargestellt) das Verriegelungselement 16 vollständig eingezogen wird, um eine Entnahme der Kopfstütze 10 zu ermöglichen.

Zuvor muss jedoch in einer vorgelagerten oder parallel auszuführenden dritten Bedienhandlung das Sperrglied 12B betätigt werden, indem die Sperrgliedbetätigungsfläche 20 gedrückt wird, so dass die Anlagefläche 12K an der Hülse 12F nicht mehr zur Anlage kommt, so dass die axiale Bewegungsrichtung des Tasters 12A fortgesetzt werden kann.

Bei der vorgelagerten Betätigung muss das Sperrglied selbstverständlich in der verlagerten Position gehalten werden, um die zweite Bedienhandlung ausführen zu können.

In der Hülse 12F ist zusätzlich ein Rand 12I angeordnet, der die Bewegung des Tasters 12A in axialer Richtung begrenzt. Gleichzeitig ist zwischen dem Rand 12I und der nach innen gerichteten Fläche des Tastknopfes 12A ein Federelement 22 angeordnet, welches bei der ersten und/oder zweiten Bedienhandlung gespannt wird, so dass Rückstellkräfte am Taster 12A wirken und eine Rückführung des Tasters 12A ausführbar ist, sobald die erste oder zweite Betätigungshandlung ausgesetzt wird. Ein weiteres Federelement 22, in den Figuren nicht dargestellt, kann auch am Betätigungsstab 24 angeordnet sein, so dass der Taster 12A über Rückstellkräfte am Betätigungsstab 24, die über die Auflaufschräge auch auf den Taster 12A wirken, sichergestellt ist.

Figur 3A zeigt abschließend, dass die Endposition des Tasters 12A nach Überwindung der zweiten Druckstufe II nicht nur durch den Rand 12I in der Hülse 12F des Betätigungselementes 12 gesichert wird, sondern dass der zweite Sperrzahn 12D nach Betätigung des Sperrgliedes 12B an der Hülse 12F zur Anlage kommt und dort wiederum mit der Hülse 12F eine Anlagefläche 12K bildet.

Aus dieser Beschreibung ergibt sich, dass das Sperrglied 12B selbstverständlich an seiner Befestigungsstelle am Taster 12A in ausreichendem Maß flexibel angeordnet sein muss und zwar so, dass stets eine durch das Material hervorgerufene Rückstellung des Sperrgliedes 12B erfolgt, wenn die dritte Bedienhandlung zurückgenommen wird.

Eine Entnahme der Kopfstütze 10 erfordert in der hier vorliegenden Lösung eine erhöhte Aufmerksamkeit, da der Bediener zur Entnahme der Kopfstütze zwei Bedienhandlungen, die zweite und dritte Bedienhandlung parallel oder die zweite Bedienhandlung vor der dritten Bedienhandlung unter Halten des Sperrgliedes 12B vornehmen muss, so dass die regelmäßig durchzuführende erste Bedienhandlung zur Höhenverstellung keinesfalls zu einer Falschbedienung führt, die gegebenenfalls eine Entnahme und somit nicht ausreichende Fixierung im Gestellteil der Rückenlehne ermöglichen würde.

### Bezugszeichenliste

- 10: Kopfstütze
- 12: Betätigungselement
- 12A: Taste
- 12B: Sperrglied
- 12C: erster Sperrzahn
- 12D: zweiter Sperrzahn
- 12E: Blende
- 12F: Hülse
- 12G: Öffnung
- 12H: Auflaufschräge
- 12I: Rand
- 12K: Anlagefläche
- 14: Halteelement
- 16: Verriegelungselement
- 18: Tastenbetätigungsfläche
- 20: Sperrgliedbetätigungsfläche
- 22: Federelement
- 24: Betätigungsstab im Halteelement
- I: erste Druckstufe
- II: zweite Druckstufe

## Patentansprüche

1. Betätigungsvorrichtung für eine Kopfstütze (10), die über mindestens ein Halteelement (14) in einem Gestellteil eines Sitzes geführt und zumindest mittelbar gehalten ist, welches in verschiedenen Höhen durch ein mit mindestens einem Verriegelungselement (16) zusammenwirkendes zu bedienendes Betätigungselement (12) relativ zum Gestellteil positionierbar ist, wobei eine erste Bedienhandlung des Betätigungselementes (12) in axialer Richtung eine Höhenverstellung unter Überwindung einer ersten Druckstufe (I) und eine zweite Bedienhandlung des Betätigungselementes (12) weiter in axialer Richtung unter Überwindung einer zweiten Druckstufe (II) eine Entnahme der Kopfstütze (10) aus dem Gestellteil des Sitzes erlaubt, **dadurch gekennzeichnet, dass** die zweite Bedienhandlung des Betätigungselementes (12) zur Entnahme der Kopfstütze (10) weiter in axialer Richtung durch eine der zweiten Bedienhandlung vorgelagerte oder parallele dritte Bedienhandlung an mindestens einem in dem Betätigungselement (12) integrierten Sperrglied (12B) fortsetzbar ist, dessen Anlagefläche (12K) durch die dritte Bedienhandlung an einer Hülse (12F) des Betätigungselementes (12) nicht mehr zur Anlage kommt.

2. Betätigungsvorrichtung nach Anspruch 1, **dadurch gekennzeichnet, dass** die erste Bedienhandlung durch Drücken an einer Taste (12A) des Betätigungselementes (12) durch Überwindung der ersten Druckstufe (I) und eine zweite Bedienhandlung durch Überwindung der zweiten Druckstufe (II) an der Taste (12A) erfolgt, wodurch eine Übertragung der Bewegung des Betätigungselementes (12) über einen Betätigungsstab (24) innerhalb des Halteelementes (14) eine druckstufenabhängige Verlagerung des Verriegelungselementes bewirkt.

3. Betätigungsvorrichtung nach Anspruch 1, **dadurch gekennzeichnet, dass** das mindestens eine Halteelement (14) zur Höhenverstellung der Kopfstütze (10) nach erfolgter erster Bedienhandlung, durch das mindestens eine Verriegelungselement (16) relativ zum Gestellteil in einer Rasteinheit rastpositionierbar ist, wobei das Halteelement (14) unmittelbar im Gestellteil oder mittelbar in mindestens einem Führungselement im Gestellteil angeordnet ist.

4. Betätigungsvorrichtung nach Anspruch 2 **dadurch gekennzeichnet, dass** das in der Kopfstütze (10) angeordnete Betätigungselement (12) die Hülse (12F) und eine das Betätigungselement (12) gegenüber der Kopfstütze (10) abgrenzende Blende (12E) umfasst, in der die Taste (12A) angeordnet ist, die in der Hülse (12F) geführt ist, und an dessen Tastenbetätigungsfläche (18) die erste und zweite Bedienhandlung ausführbar ist.

5. Betätigungsvorrichtung nach Anspruch 2, **dadurch gekennzeichnet, dass** der Taste (12A) bei erfolgter erster und zweiter Bedienhandlung über eine der Tastenbetätigungsfläche (18) gegenüberliegende ausgebildete Anlaufschräge (12H) axial auf das obere Ende des innerhalb des Halteelementes (14) geführten Betätigungsstabes (24) einwirkt, der das Verriegelungselement (16) mit seinem unteren Ende gegenüber der Rasteinheit, welche unmittelbar im Gestellteil oder mittelbar in dem mindestens einen Führungselement angeordnet ist, - druckstufenabhängig - nach der ersten Bedienhandlung in der ersten Druckstufe (I) zumindest teilweise und nach der zweiten Bedienhandlung der zweiten Druckstufe (II) vollständig in einer der ersten und zweiten Bedienhandlung entgegengesetzten axialen Richtung einzieht.

6. Betätigungsvorrichtung nach einem der vorhergehenden Ansprüche, **dadurch gekennzeichnet, dass** die Hülse (12F) des Betätigungselementes (12) eine radial angeordnete Öffnung (12G) aufweist, über welche die dritte Bedienhandlung an einer Sperrgliedbetätigungsfläche (20) ausführbar ist, wobei die Öffnung (12G) in Richtung der ersten und zweiten Bedienhandlung des Betätigungselementes (12) gleichzeitig eine Anlagefläche (12K) bietet, an der das Sperrglied (12B) mit seinem der Taste (12A) gegenüberliegenden Ende nach erfolgter erster Bedienhandlung zur Anlage kommt.

7. Betätigungsvorrichtung nach einem der Ansprüche 2 bis 6, **dadurch gekennzeichnet, dass** eine Rückführung der Taste (12A) nach erfolgter Bedienhandlung unter Aufbau von Rückstellkräften durch Federelemente (22) erfolgt, die im Bereich des Betätigungsstabes und/oder im Bereich der Hülse (12F) des Befestigungselementes (12) angeordnet sind.

## Claims

1. Actuating device for a head restraint (10) which is guided and is at least indirectly held in a frame part of a seat via at least one holding element (14) which can be positioned at various heights relative to the frame part by means of an actuating element (12) which interacts with at least one locking element (16) and can be operated, wherein a first operating action of the actuating element (12) in the axial direction permits height adjustment of the head restraint (10), overcoming a first pressure stage (I), and a second operating action of the actuating element (12) further in the axial direction, overcoming a second pressure stage (II), permits removal thereof from the frame part of the seat, **characterized in that** the second operating action of the actuating element (12) for removing the head restraint (10) further in the axial direction can be continued by a third operating action, which is carried out before or in parallel with the second operating action, on at least one blocking member (12B) integrated in the actuating element (12), the bearing surface (12K) of which blocking member (12B) no longer comes to bear against a sleeve (12F) of the actuating element (12) by means of the third operating action.

2. Actuating device according to Claim 1, **characterized in that** the first operating action takes place by pressing on a push-button (12A) of the actuating element (12) and by overcoming the first pressure stage (I) and a second operating action takes place by overcoming the second pressure stage (II) at the push-button (12A), as a result of which a transmission of the movement of the actuating element (12) via an actuating bar (24) within the holding element (14) brings about a pressure-stage-dependent shifting of the locking element.

3. Actuating device according to Claim 1, **characterized in that**, in order to adjust the height of the head restraint (10), the at least one holding element (14), after the first operating action has taken place, can be latched in position in a latching unit relative to the frame part by means of the at least one locking element (16), with the holding element (14) being arranged directly in the frame part or indirectly in the frame part in at least one guide element.

4. Actuating device according to Claim 2, **characterized in that** the actuating element (12) arranged in the head restraint (10) comprises the sleeve (12F) and a protective cover (12E) which delimits the actuating element (12) from the head restraint (10) and in which the push-button (12A) is arranged, said push-button being guided in the sleeve (12F) and on the push-button actuating surface (18) of which the first and second operating actions can be carried out.

5. Actuating device according to Claim 2, **characterized in that**, during the first and second operating actions, the push-button (12A) acts axially via a run-on slope (12H), which is formed opposite the push-button actuating surface (18), on the upper end of the actuating bar (24) which is guided within the holding element (14) and - as a function of the pressure stage - retracts the locking element (16) at its lower end in relation to the latching unit, which is arranged directly in the frame part or indirectly in the at least one guide element, at least partially, after the first operating action in the first pressure stage (I) and completely, after the second operating action of the second pressure stage (II), in an axial direction opposed to the first and second operating actions.

6. Actuating device according to one of the preceding claims, **characterized in that** the sleeve (12F) of the actuating element (12) has a radially arranged opening (12G) via which the third operating action can be carried out on a blocking-member actuating surface (20), the opening (12G) at the same time providing, in the direction of the first and second operating actions of the actuating element (12), a bearing surface (12K) against which the blocking member (12B) comes to bear with its end opposite the push-button (12A) after the first operating action has taken place.

7. Actuating device according to one of Claims 2 to 6, **characterized in that**, after the operating action has taken place, the push-button (12A) is returned with the build up of restoring forces by means of spring elements (22) which are arranged in the region of the actuating bar and/or in the region of the sleeve (12F) of the fastening element (12).

## Revendications

1. Dispositif d'actionnement pour un appui-tête (10) qui est guidé par le biais d'au moins un élément de retenue (14) et qui est retenu de manière au moins indirecte dans une partie de châssis d'un siège, l'élément de retenue pouvant être positionné par rapport à la partie de châssis à différentes hauteurs par un élément d'actionnement (12) à commander, coopérant avec au moins un élément de verrouillage (16), une première manipulation de l'élément d'actionnement (12) dans la direction axiale permettant un réglage en hauteur en surmontant un premier niveau de pression (I) et une deuxième manipulation de l'élément d'actionnement (12) davantage dans la direction axiale en surmontant un deuxième niveau de pression (II) permettant d'enlever l'appui-tête (10) de la partie de châssis du siège, **caractérisé en ce que** la deuxième manipulation de l'élément d'actionnement (12) pour enlever l'appui-tête (10) davantage dans la direction axiale peut se poursuivre par une troisième manipulation préalable à la deuxième manipulation ou parallèle à celle-ci au niveau d'au moins un organe d'arrêt (12B) intégré dans l'élément d'actionnement (12), dont la face d'appui (12K) ne vient plus en appui, du fait de la troisième manipulation, contre une douille (12F) de l'élément d'actionnement (12).

2. Dispositif d'actionnement selon la revendication 1, **caractérisé en ce que** la première manipulation s'effectue par pression sur une touche (12A) de l'élément d'actionnement (12) en surmontant le premier niveau de pression (I) et une deuxième manipulation s'effectue en surmontant le deuxième niveau de pression (II) au niveau de la touche (12A), de sorte qu'un transfert du mouvement de l'élément d'actionnement (12) par le biais d'une barre d'actionnement (24) à l'intérieur de l'élément de retenue (14) provoque un décalage de l'élément de verrouillage en fonction du niveau de pression.

3. Dispositif d'actionnement selon la revendication 1, **caractérisé en ce que** l'au moins un élément de retenue (14) en vue du réglage en hauteur de l'appui-tête (10) après avoir effectué la première manipulation peut être positionné par encliquetage par l'au moins un élément de verrouillage (16) par rapport à la partie de châssis dans une unité d'encliquetage, l'élément de retenue (14) étant disposé directement dans la partie de châssis ou indirectement dans au moins un élément de guidage dans la partie de châssis.

4. Dispositif d'actionnement selon la revendication 2, **caractérisé en ce que** l'élément d'actionnement (12) disposé dans l'appui-tête (10) comprend la douille (12F) et un écran (12E) limitant l'élément d'actionnement (12) par rapport à l'appui-tête (10), dans lequel est disposée la touche (12A) qui est guidée dans la douille (12F), et sur la surface d'actionnement de touche (18) de laquelle peuvent être effectuées la première et la deuxième manipulation.

5. Dispositif d'actionnement selon la revendication 2, **caractérisé en ce que** la touche (12A), une fois la première et la deuxième manipulation effectuées, agit par le biais d'un biseau de butée (12H) réalisé en regard de la surface d'actionnement de touche (18) axialement sur l'extrémité supérieure de la barre d'actionnement (24) guidée à l'intérieur de l'élément de retenue (14), laquelle barre rentre l'élément de verrouillage (16), avec son extrémité inférieure par rapport à l'unité d'encliquetage, qui est disposée directement dans la partie de châssis ou indirectement dans l'au moins un élément de guidage, en fonction du niveau de pression, après la première manipulation au premier niveau de pression (I) au moins en partie, et après la deuxième manipulation au deuxième niveau de pression (II) complètement, dans une direction axiale opposée à la première et à la deuxième manipulation.

6. Dispositif d'actionnement selon l'une quelconque des revendications précédentes, **caractérisé en ce que** la douille (12F) de l'élément d'actionnement (12) présente une ouverture disposée radialement (12G) par le biais de laquelle la troisième manipulation peut être effectuée au niveau d'une surface d'actionnement de l'organe d'arrêt (20), l'ouverture (12G), dans la direction de la première et de la deuxième manipulation de l'élément d'actionnement (12), offrant simultanément une face d'appui (12K) contre laquelle l'organe d'arrêt (12B) vient en appui avec son extrémité opposée à la touche (12A) après que la première manipulation a été effectuée.

7. Dispositif d'actionnement selon l'une quelconque des revendications 2 à 6, **caractérisé en ce qu'**un retour de la touche (12A) après que la manipulation a été effectuée s'effectue en produisant des forces de rappel par des éléments de ressort (22) qui sont disposés dans la région de la barre d'actionnement et/ou dans la région de la douille (12F) de l'élément d'actionnement (12).
